(19) 
**Europäisches Patentamt**
**European Patent Office**
**Office européen des brevets**

(11) **EP 2 255 532 B1**

(12) **EUROPEAN PATENT SPECIFICATION**

(45) Date of publication and mention
of the grant of the patent:
**19.10.2016 Bulletin 2016/42**

(51) Int Cl.:
***H04N 7/16*** (2006.01)

(21) Application number: **09702439.2**

(22) Date of filing: **16.01.2009**

(86) International application number:
**PCT/EP2009/050521**

(87) International publication number:
**WO 2009/090258 (23.07.2009 Gazette 2009/30)**

(54) **METHOD AND APPARATUS FOR SELECTIVE DATA ENCRYPTION**

VEFAHREN UND VORRICHTUNG ZUR SELEKTIVEN DATAVERSCHLÜSSELUNG

PROCÉDÉ ET APPAREIL POUR UN CRYPTAGE SÉLECTIF DE DONNÉES

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **17.01.2008 EP 08300035**
**14.02.2008 EP 08300093**

(43) Date of publication of application:
**01.12.2010 Bulletin 2010/48**

(73) Proprietor: **Thomson Licensing**
**92130 Issy-les-Moulineaux (FR)**

(72) Inventors:
• **MASSOUDI, Ayoub**
**35510 Cesson-Sévigné (FR)**
• **LEFEBVRE, Frederic**
**35000 Rennes (FR)**
• **DURAND, Alain**
**35000 Rennes (FR)**

(74) Representative: **Ståhl, Björn Niclas et al**
**Technicolor**
**1, rue Jeanne d'Arc**
**92443 Issy-les-Moulineaux (FR)**

(56) References cited:
• **DUFAUX F ET AL: "Smart Video Surveillance System Preserving Privacy" PROCEEDINGS OF THE SPIE, SPIE, BELLINGHAM, VA , US, vol. 5685, 1 March 2005 (2005-03-01), pages 54-63, XP002430633 ISSN: 0277-786X**
• **TAUBMAN D: "JPEG 2000 Verification Model VM3A, ISO/IEC JTC1/SC29/WG1 N1143" ISO/IEC JTC1/SC29/WG1 N1143, XX, XX, 1 February 1999 (1999-02-01), pages 1-90, XP002146099**
• **A. MASSOUDI, F. LEFEBVRE: "Secure and low cost selective encryption for JPEG2000" ISM08 PROCEEDINGS, December 2008 (2008-12), XP002523128**
• **F. DUFAUX, S. WEE, J. APOSTOLOPOULOS, T. EBRAHIMI: "JPSEC for secure imaging in JPEG 2000" APPLICATIONS OF DIGITAL IMAGE PROCESSING XXVII, vol. 5558, November 2004 (2004-11), pages 319-330, XP002523784**
• **F. DUFAUX, T. EBRAHIMI: "Video surveillance using JPEG2000" APPLICATIONS OF DIGITAL IMAGE PROCESSING XXVII, vol. 5558, November 2004 (2004-11), pages 268-275, XP002523127**

**Description**

FIELD OF THE INVENTION

The present invention relates generally to data encryption, and in particular to encryption of image data organised in bit streams.

BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

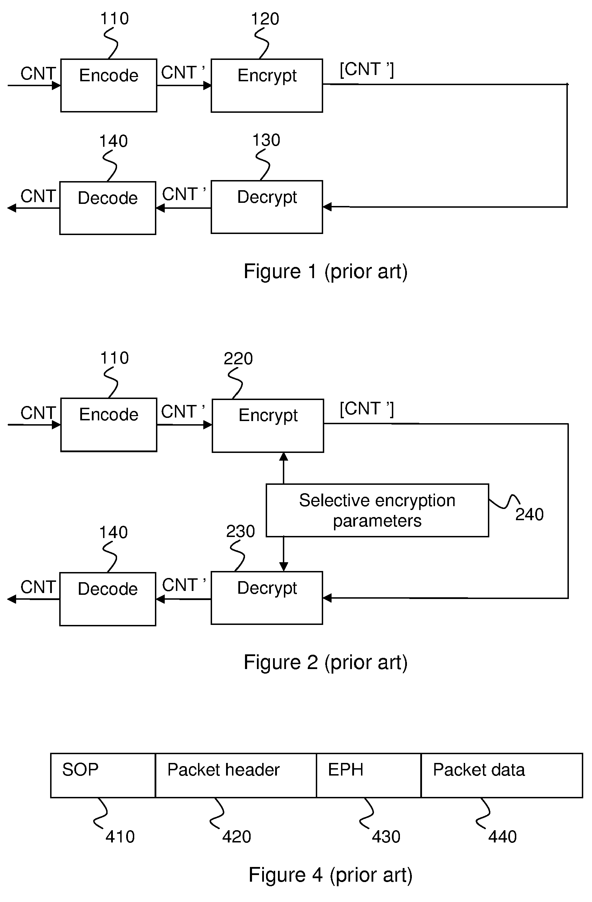

It has long been known to protect video data by encryption, notably in conditional access television systems. Figure 1 illustrates a traditional prior art approach for content access control. The video signal CNT is first encoded 110 using a standard compression encoder, and the resulting bit stream CNT' is then encrypted 120 using a symmetric encryption standard (such as DES, AES, or IDEA). The encrypted bit stream [CNT'] is then received by a receiver that decrypts 130 the encrypted bit stream [CNT'] to obtain an encoded bit stream CNT' that is decoded 140 to obtain a video signal CNT that is, at least in theory, identical to the initial video signal. In this approach, called fully layered, compression and encryption are completely independent processes. The media bit stream is processed as classical plaintext data, with the assumption that all symbols or bits in the plaintext are of equal importance.

This scheme is relevant when the transmission of the content is unconstrained, but it seems inadequate in situations where resources (such as memory, power or computation capabilities) are limited. Much research shows the specific characteristic of image and video content: high transmission rate and limited allowed bandwidth, which justifies the inadequacy of standard cryptographic techniques for such content. This has led to researchers to explore a new scheme of securing the content - named "selective encryption", "partial encryption", "soft encryption", or "perceptual encryption" - by applying encryption to a subset of a bit stream with the expectation that the resulting partially encrypted bit stream is useless without the decryption of the encrypted subset. The general approach is to separate the content into two parts: the first part is the basic part of the signal (for example Direct Current, DC, coefficients in Discrete Cosine Transform, DCT, decomposition, or the low frequency layer in Discrete Wavelet Transform, DWT, decomposition), which allows the reconstruction of an intelligible, but low quality version of the original signal, and a second part that could be called the "enhancement" part (for example Alternating Current, AC, coefficients in DCT decomposition of an image, or high frequency layers in DWT), which allows the recovery of fine details of the image and reconstruction of a high quality version of the original signal. According to this new scheme, only the basic part is encrypted, while the enhancement part is sent unencrypted or in some cases with light-weight scrambling. The aim is to protect the content and not the binary stream itself.

Figure 2 illustrates selective encryption according to the prior art. Encoding and decoding is performed as in Figure 1. In selective encryption, the encoded bit stream CNT' is encrypted 220 depending on selective encryption parameters 240. These parameters may, as mentioned, for example state that the only the DC coefficients or the low frequency layer should be encrypted, while the rest of the encoded bit stream CNT' should be left unencrypted. The partially encrypted bit stream [CNT'] is then (partially) decrypted 230 depending on the selective encryption parameters 240.

The following criteria are important for the evaluation of any selective encryption algorithm and will be used for the discussion of prior art algorithms:

- **Tunability:** a tunable selective encryption algorithm allows the variation of encryption parameters, which may be a desirable characteristic.
- **Visual degradation:** evaluates how much the encrypted image is distorted compared to the plain image. In some applications, low visual degradation could be desirable in order for customers to have degraded but visible content, as this permits a preview, while other applications may require strong visual degradation.
- **Cryptographic security:** gives a measure of how difficult the algorithm is to crack. The security of the algorithm relies partly on the encryption key, but it is advantageous that the encrypted part is not or hardly predictable from the non-encrypted part.
- **Encryption reduction:** gives the ratio of the encrypted part to the whole data. An efficient algorithm advantageously minimizes this ratio.
- **Format compliance/transcodability:** it is preferred that the encrypted bit stream be compliant with the compression format used to generate the compressed bit stream and that any standard decoder be able to decode the encrypted bit stream without decryption.
- **Compression friendliness:** a selective encryption algorithm is considered compression friendly if it has no or very little impact on compression efficiency.
- **Error resiliency:** indicates the desirable characteristic that a selective encryption algorithm does not propagate transmission errors and/or that it preserves the encoder error resiliency.

Further, as the prior art seems to focus on JPEG2000, which will also be used as a non-limitative embodiment of the invention, a brief introduction to relevant parts of this standard, i.e. its code stream structure, will now be given.

The JPEG2000 code stream is organized into packets, code stream packets are elementary units that transport data from a specific combination of entities called Resolution, Layer, Component and Precinct. A compressed image with R resolutions, L layers, P precincts and C components, thus results in RxLxCxP packets. It should be noted that the EBCOT (Embedded Block Coding Optimized Truncation) function of JPEG2000 encoder is able to provide information relating to the distortion-to-rate ratio of each packet.

JPEG2000 makes use of an embedded bit stream: the code stream can be truncated at any given end of packet without adverse impact on previously coded ones.

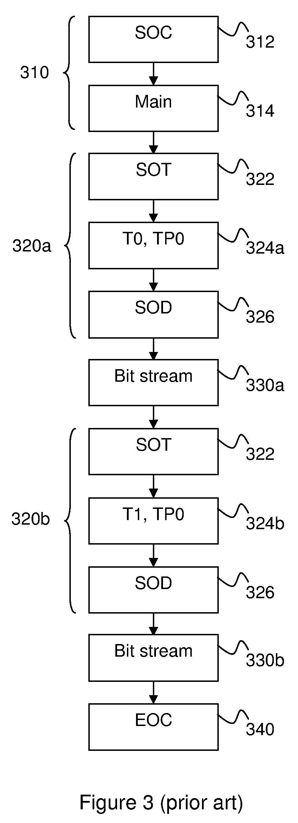

Figure 3 illustrates the main code stream structure, comprising:

- A main header 310, comprising a Start of Code stream (SOC = 0xFF4F) marker segment 312 and the main header marker segments 314. The SOC marker indicates the start of the code stream and is required as the first marker. The main header marker segments indicate many user defined compression parameters, such as for example progression order, main coding style, components coding style, and tile size.
- One or more Tile-part headers 320a, 320b, each comprising a Start of Tile-part marker (SOT = 0xFF90) 322, tile part information 324a, 324b, and a Start of Data marker (SOD = 0xFF93) 326. As will be appreciated, the SOT 322 and the SOD 326 have standard values, while the tile part information 324a, 324b comprises information about the tile; e.g. tile part information 324a indicates that it belongs to Tile 0, while tile part information 324b indicates that it belongs to Tile 1. At least one tile-part header 320a, 320b is required at the beginning of each tile-part, which comprises the tile-part header 320a, 320b and, usually, a following bit stream 330a, 330b, where the SOD marker indicates the start of the bit stream 330a, 330b that contains the compressed data.
- End of Code stream 340: this marker (EOC = 0xFFD9) indicates the end of the code stream.

It should be noted that for packet data, some code words - the ones in the range [0xFF90; 0xFFFF -are reserved in JPEG2000. Such reserved code words are used as markers and marker segments that delimit the main building blocks of the stream. For example, the SOT (0xFF90), the SOD (0xFF93) and the EOC (0xFFD9) are such reserved code words. When encrypting the code stream, it is important to ensure that 'normal' (i.e. non-reserved) code words do not result in encrypted code words whose value are reserved.

As can be seen, the bit stream is mainly composed of packet headers and packet data that form packets. Figure 4 illustrates an exemplary JPEG2000 packet comprising a packet header 420 and packet data 440. Packet headers may be used in the bit stream or in the main header depending on the user defined options. Figure 4 shows the use of such headers: a Start of Packet header 410 (SOP = 0xFF91) and an End of Packet Header 430 (EPH = 0xFF92) respectively indicate the start and the end of the packet header 420.

The packet header 420 comprises information needed by the decoder to correctly parse and decode the packet data:

- Zero length packet: indicates whether or not the current packet is empty.
- Code-block inclusion: for each precinct, a tag tree is used to encode inclusion information for code blocks included.
- Zero-bitplane information: for each precinct, a tag tree encodes the first non zero bit-plane.
- Number of coding passes: Huffman-style code words are used to encode the number of coding passes included for each code block.
- Length of compressed data from each code block.

In "Techniques for a Selective Encryption of Uncompressed and Compressed Images", Proceedings of Advanced Concepts for Intelligent Vision Systems (ACIVS) 2002, Ghent, Belgium, September 9-11, 2002, M. Van Droogenbroeck and R. Benedett propose to have the JPEG Huffman coder terminate runs of zeros with code words/symbols in order to approach the entropy. Appended bits are added to these code words to fully specify the magnitudes and signs of non-zero coefficients, only these appended bits are encrypted using DES or IDEA. Using the criteria established hereinbefore, the solution performs as follows:

- **Tunability:** This method offers no tunability.
- **Visual degradation:** acceptable level of visual degradation is achieved.
- **Cryptographic security:** about 92% of the data is encrypted using secure symmetric ciphers and it is probably very difficult to break the encryption algorithm or try to predict the encrypted part.
- **Encryption reduction:** To achieve a sufficient level of visual degradation, it was found that at most 5 coefficients should be left unencrypted. This yields an encrypted part of 92%, which is relatively high.
- **Format compliance/transcodability:** JPEG compliant.
- **Compression friendliness:** The encryption is separated from the Huffman coder and has no impact on the compression efficiency.
- **Error resiliency:** the avalanche effect of DES algorithm propagates single bit errors to many bit errors, thus this encryption algorithm do not preserve error resiliency.

In "Selective Encryption of Wavelet-Packet Encoded Image Data", ACM Multimedia Systems Journal, Special Issue on Multimedia Security in 2003, A. Pommer and A. Uhl propose an algorithm based on AES encryption of the header information of wavelet packet encoding of an image, the header specifying the sub-band tree structure. Using the criteria established hereinbefore, the solution performs as follows:

- **Tunability:** the encryption parameters are static, no tunability is possible.
- **Visual degradation:** 100%; the encrypted content cannot be viewed without decryption.
- **Cryptographic security:** Not secure against chosen plaintext attack because statistical properties of wavelet coefficients are preserved by the encryption, so an approximation sub-band can be reconstructed. This will give the attacker the size of the approximation sub-band (lower resolution) and then neighbouring sub-bands can be reconstructed since close sub-bands contain highly correlated coefficients.
- **Encryption reduction:** high reduction in encryption; the sub-band tree structure represents a small fraction in wavelet encoding.
- **Format compliance/transcodability:** not compliant; indeed, it supposes that the encoder does not use standard wavelet packet decomposition.
- **Compression friendliness:** the sub-band tree is pseudo-randomly generated, which adversely impacts the compression efficiency.
- **Error resiliency:** the avalanche effect of AES algorithm propagates single bit errors to many bit errors.

In "Compliant Encryption of JPEG2000 Codestreams", IEEE International Conference on Image Processing (ICIP 2004), Singapore, October 2004, Y. Wu and R. H. Deng propose a JPEG2000 compliant encryption algorithm which iteratively encrypts Codeblock Contribution to Packets (CCPs). The encryption process acts on CCPs (in the packet data) using stream ciphers or block ciphers, preferably stream ciphers with arithmetic module addition. The key stream is generated using Rivest Cipher 4 (RC4). Each CCP is iteratively encrypted until it has no forbidden code words (i.e. any code word in the range [0xFF90, 0xFFFF]). Using the criteria established hereinbefore, the solution performs as follows:

- **Tunability:** not tunable
- **Visual degradation:** variable; depends on the number of CCPs encrypted.
- **Cryptographic security:** depends on the number of CCPs encrypted. However, the possible need for many iterations to obtain a compliant code stream could give information for side channel attacks.
- **Encryption reduction:** The encryption is iterative, thus many iterations may be needed to achieve compliance especially for large CCPs where almost half of the encrypted CCPs need to be encrypted more than once to achieve compliance.

- **Format compliance/transcodability:** Fully compliant with JPEG2000.
- **Compression friendliness:** No impact on compression.
- **Error resiliency:** The encryption algorithm is block based; any error at a given bit in the encrypted bit stream will propagate to many other bits, which introduces strong distortion on the decrypted image.

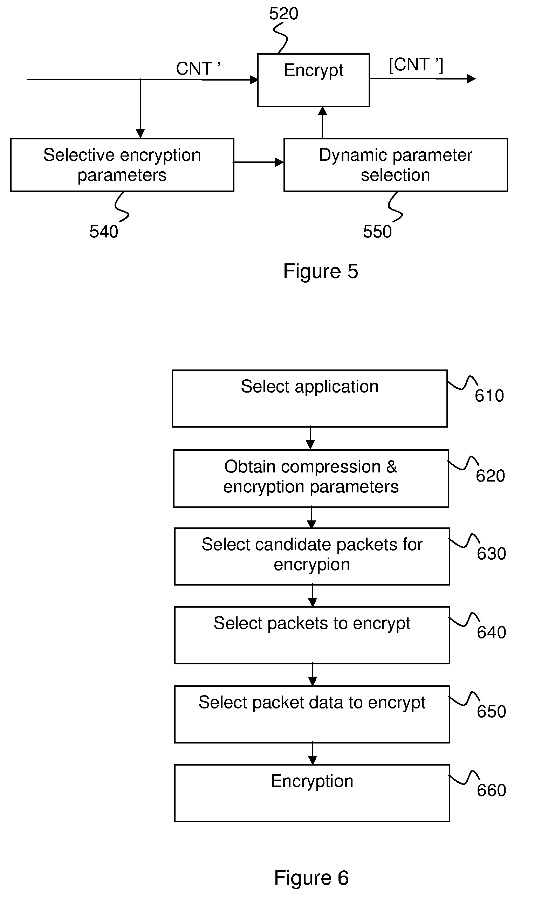

In "Selective Encryption of the JPEG2000 Bitstream", Journal of Electronic Imaging -- October - December 2006 -- Volume 15, Issue 4, 043013, R. Norcen and A. Uhl observe that JPEG2000 is an embedded bit stream and that the most important data is sent at the beginning of the bit stream. Based on this, the proposed scheme consists in AES encryption of selected packet data. The algorithm uses two optional markers SOP and EPH (as illustrated in Figure 5) to identify packet data. Then, this packet data is encrypted using AES in CFB mode, as the packet data has variable length. The experiments were conducted on two kinds of images (lossy and lossless compressed), with different progression orders (resolution and layer progression orders). The evaluation criterion was the visual degradation obtained for a given amount of encrypted data. It was found that for the lossy compressed images, layer progression gives better results. For lossless compressed images, resolution progression gives better results.

- **Tunability:** not tunable.
- **Visual degradation:** high visual degradation is achievable by encrypting 20% of the data.
- **Cryptographic security:** not addressed by the authors who base their security evaluation on visual degradation, which is not a reliable security criterion.
- **Encryption reduction:** 20% of the data is encrypted to achieve an acceptable level of visual degradation.
- **Format compliance/transcodability:** not JPEG2000 compliant.
- **Compression friendliness:** no impact on compression.
- **Error resiliency:** the proposed scheme is based on AES in CFB mode. This chaining mode propagates errors in the ciphertext to many errors in the plaintext after decryption.

In "Smart Video Surveillance System Preserving Privacy", Dufeaux et al. describe a video surveillance system in which scrambling is applied only to 'interesting' regions. The amount of distortion can be controlled by restricting scrambling to some resolution levels. The scrambling can be light (e.g. limited to high resolution levels), resulting in people appearing visible but sufficiently fuzzy to be recognizable, or heavy (e.g. applied to all resolution levels) resulting in replacing areas with noise. The interesting regions (ROI) are indicated by upscaling the distortion estimate of these regions, resulting in an incorporation of code blocks belonging to a resolution level I in the ROI. Then, coefficients corresponding to the foreground and belonging to resolution level I are scrambled if I is greater than a pre-determined value that corresponds to the scrambling strength.

As will be seen, the prior art solutions have certain drawbacks:

- **Tunability:** The solutions propose static encryption algorithms. The main drawback of these approaches is that the encrypted part is not optimized to reduce the amount of data to be encrypted and maximize the content security.
- **Visual degradation:** It is desirable to have a tunable algorithm that allows multi-level visual degradation.
- **Cryptographic security:** In many solutions, this criterion is not considered at all and visual degradation is used as the only security criterion, which is not sufficient as many algorithms achieve important visual degradation but weak cryptographic security.
- **Encryption reduction:** while some solutions achieve significant encryption reduction, others do not.
- **Format compliance/transcodability:** Many proposals do not consider this problem when designing their selective encryption algorithm. Thus, the encrypted bit stream could not be decodable by a standard decoder.
- **Compression friendliness:** some selective encryption algorithms use very large encryption keys or introduce an important file size increase.
- **Error resiliency:** This property is rarely considered in the literature. In networks prone to error, it is very desirable that the encryption algorithm does not propagate errors or adversely impact the error resiliency techniques of the encoder.

US 5805700 describes policy based selective encryption of compressed video data. The video stream is divided into a number of Basic transfer Units (BTUs), so that each frame is carried by a plurality of BTUs. In one embodiment, only the BTUs carrying the start code of an I-frame or, alternately, a P-frame are encrypted.

US 2005/0183118 teaches a coding device that uses distortion to decide which segments are most important (are linked to the greatest distortion) and thus kept and which have lesser importance and can be discarded.

It can therefore be appreciated that there is a need for a flexible solution that allows adaptation to different kinds of applications and minimizes the amount of data to encrypt while maximizing the security of the encrypted content. This invention provides such a solution.

## SUMMARY OF THE INVENTION

In a first aspect, the invention is directed to a method of protecting visual content organised in packets.

The non-protected packet with the highest distortion-to-rate ratio is protected; and this protection step is repeated until a predetermined distortion for the visual content is obtained.

According to a first preferred embodiment, the method further comprises the preceding step of calculating the distortion-to-rate ratio of the packets. It is advantageous that the method comprises the preceding step of calculating the contribution of each packet to the reduction of image distortion.

According to a second preferred embodiment, the method further comprises the step of selecting at least one part of the packet to protect.

According to a third preferred embodiment, the method further comprises the step of outputting the encrypted visual content and information about which packets are protected.

According to a fourth preferred embodiment, the method further comprises the step of sorting the packets according to their distortion-to-rate ratio.

According to a fifth preferred embodiment, the protection step comprises encrypting the non-protected packet.

According to a sixth preferred embodiment, the protection step comprises substituting data in the non-protected packet with dummy data In a second aspect, the invention is directed to an apparatus for protecting visual content organised in packets. The apparatus comprises a protection device adapted to protect the non-protected packet with the highest distortion-to-rate ratio; and to repeat the protection step until a predetermined distortion for the visual content is obtained.

According to a first preferred embodiment, the protection device is adapted to protect the non-protected packet by using encryption.

## BRIEF DESCRIPTION OF THE DRAWINGS

Preferred features of the present invention will now be described, by way of non-limiting example, with reference to the accompanying drawings, in which:

Figure 1 illustrates a traditional prior art approach for content access control;
Figure 2 illustrates selective encryption according to the prior art;
Figure 3 illustrates the prior art JPEG2000 main code stream structure;
Figure 4 illustrates an exemplary prior art JPEG2000 packet;
Figure 5 illustrates the main inventive idea of the invention;
Figure 6 illustrates a preferred embodiment of selective encryption according to the invention;
Figure 7 illustrates a method for optimal packet selection according to a preferred embodiment of the invention; and
Figure 8 illustrates apparatuses for encryption and decryption according to a preferred embodiment of the invention.

## PREFERRED EMBODIMENT OF THE INVENTION

Figure 5 illustrates the main inventive idea of the invention: the introduction of a new process called "dynamic data selection". For a given input compressed bit stream CNT', a set of encryption parameters is selected 540. With the selected set of encryption parameters and the compressed bit stream CNT', the packets to encrypt are dynamically selected 550 and encrypted 520 to produce an encrypted bit stream [CNT'].

In the preferred, non-limitative, embodiment, the invention is used in a JPEG2000 system. Figure 6 illustrates a preferred embodiment of selective encryption according to the invention. First, an application is chosen 610, as will be further described hereinafter, which determines the compression parameters, such as progression order and number of resolutions. The encryption is then controlled by a number of encryption parameters that depend on the chosen application:

- $R_e$: defines the resolutions to encrypt
- $L_{er}$: layers encryption ratio; defines the percentage of layers to encrypt
- $P_{er}$: packets encryption ratio; defines the percentage of bytes to encrypt within each packet
- $C_e$: defines the components to encrypt
- $P_e$: defines the precincts to encrypt

When the compression parameters and the encryption parameters have been obtained 620, a set of packets $S_1$ that are candidates for encryption is selected 630. This set of packets $S_1$ may for example be the packets of the resolutions to encrypt. Then, metadata generated by the JPEG2000 encoder is used to select 640 a subset of packets to encrypt (and at least some of the metadata is also sent, possibly together with further data that enables decryption, to the receiver for use in the decryption). For each selected packet, the packet data to encrypt is then selected 650, followed by encryption of the selected data of the selected packets. The person skilled in the art will appreciate that it is not always necessary to wait for all of the packets before the selection begins. The steps of the method may thus advantageously be performed in parallel, something that also applies to the encryption step 660. It can thus be seen that the encryption parameters determine the data to be encrypted.

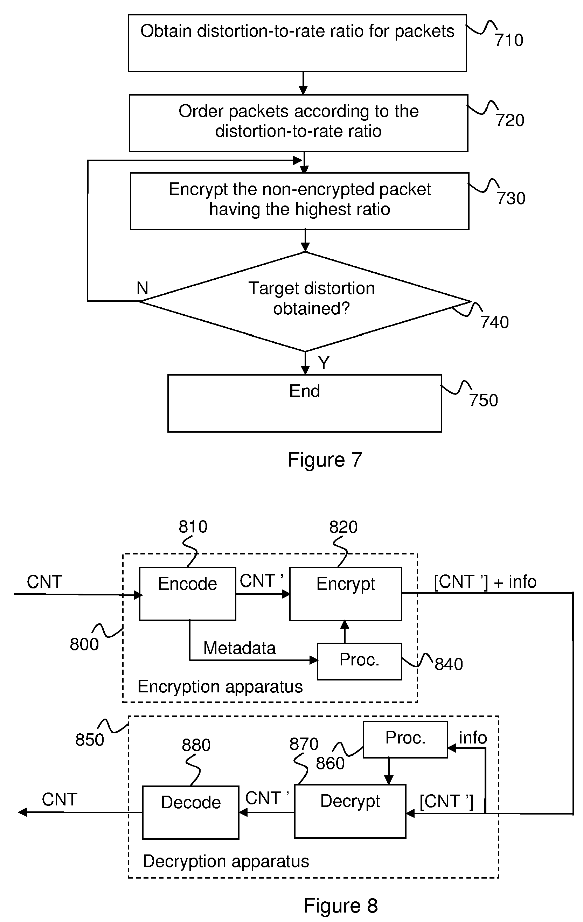

It should be noted that it is possible to optimize the packet encryption necessary to achieve a specified visual distortion (or degradation). Figure 7 illustrates a method for optimal packet selection. The JPEG2000 encoder generates a compressed image as well as related metadata comprising information about the contribution of each packet to the reduction of image distortion. This does not entail any additional computation, since these calculations are already performed by the encoder during the EBCOT rate control procedure. It is thus possible to calculate 710 the distortion-to-rate ratio for each packet as

$$\lambda = \frac{\partial D}{\partial r}$$

where D is the compressed image distortion and r is the size of the encoded bit stream corresponding to the packet. The packets may then be ordered 720 according to their distortion-to-rate ratio.

To reach a certain image distortion, it is then possible to start encryption with the packet with the highest distortion-to-rate ratio and continue with the next highest ration and so on, until the desired total image distortion is reached. Stated another way, the non-encrypted packet with the highest distortion-to-rate ratio is encrypted 730 and, if the target distortion is obtained (Y in step 740), then the method ends 750; otherwise (N in step 740) the method returns to step 730. The target distortion may be expressed as the sum of the contribution to distortion reduction of the encrypted packets.

Figure 8 illustrates apparatuses for encryption and decryption according to a preferred embodiment of the invention. The encryption apparatus 800 comprises an encoder 810 that provides an encoded data stream of packets CNT' to an encryption device 820 as well as metadata to at least one processor 840 (hereinafter "processor"). The processor is adapted to calculate the distortion-to-rate ratio and instruct the encryption device 820 (that may be embodied in the processor 840) to encrypt specific packets - i.e. the one(s) having the highest distortion-to-rate ratio - until a target distortion is obtained. The person skilled in the art will appreciate that there are many ways of doing this: the processor 840 may iteratively instruct the encryption device 820 to encrypt a packet at a time, but the processor 840 may also calculate which packets to encrypt so as to obtain the target distortion before providing instructions to encrypt all these packets. The encryption apparatus 800 is thus adapted to output a stream of encrypted and, usually also, unencrypted packets [CNT'] and information "info", such as an indication of which packets are encrypted, enabling correct decryption of the encrypted packets.

The decryption apparatus 850 comprises a processor 860 adapted to receive the information "info" enabling encryption and to instruct a decryption device 870 to decrypt specific packets. The decryption device 870 is adapted to receive the packet stream [CNT'] and to use the instructions from the processor 860 to decrypt the packets that are encrypted. Thus, a decrypted packet stream CNT' is obtained and sent to a decoding device 850 for decoding so as to obtain a reconstructed content CNT. The encryption device 850 is advantageously embodied in the processor 860. For the purposes of the description and the claims, "processor" is intended to refer to the entirety of the devices and so on with calculating abilities in an apparatus.

A variant embodiment uses data substitution instead of encryption to protect packets. In this variant, protection of the data comprises removing data in a packet and putting dummy, preferably random, data in its place. To unprotect the data, a receiver requests the data in the protected packets (or the original packets themselves) and upon, the preferably encrypted, delivery does it replace the dummy packets with the received data (or the protected packets with the received packets).

When it comes to the selection of packet data to encrypt, it will be appreciated that it is not always necessary to encrypt the entire packet data in order to obtain a sufficient level of security. In a preferred embodiment, the bytes of a packet are grouped into 16-byte blocks. If the last block is less than 16 bytes, it is left unencrypted. The preferred embodiment uses a modified CTR (counter) mode of the AES-128 algorithm that outputs a format compliant bit stream and preserves error resiliency. Packets are then encrypted depending on the packets encryption ratio; e.g. if this ratio is 50%, then only every other byte in the packet data is encrypted.

As the code words in the interval [FF90; FFFF] are forbidden, the modified CTR mode uses a modular addition instead of XOR. For decryption, all addition operations are replaced by subtraction. The encryption algorithm is as follows (where $B_k$ is the present byte to encrypt, $O_i[k]$ is the output of the AES algorithm, and $C_k$ is the encrypted byte):

- If $B_k$ = 0xFF then do not encrypt $B_k$.
- Else:

  ○ If $B_{k-1}$ = 0xFF, then $Ck = (B_k + O_i[k])$modulo[0x90],
  ○ Else $Ck = (B_k + O_i[k])$modulo[0xFF]

It will be appreciated that the algorithm avoids reiterating the encryption algorithm in order to obtain a compliant cipher bit stream.

As will be seen, the encryption parameters may be fine-tuned in order to obtain a target visual degradation or a target scalability:

- Visual degradation: increases with the number of encrypted resolutions ($R_e$) and the number of encrypted quality layers ($L_{er}$).
- Resolution scalability: for an image compressed with R resolution levels (R-1 decomposition levels), if a preview of size X˙Y is desirable (with $X = M/2^n$, $Y = N/2^n$, $n \leq R-1$), the n highest resolution levels are encrypted.
- Spatial region scalability: particular regions of the image can be selectively encrypted by specifying which precincts to encrypt ($P_e$).
- Component scalability: particular components of the image can be selectively encrypted by specifying which components to encrypt ($C_e$).
- Quality scalability: quality layers can be selectively encrypted by specifying the layers encryption ratio ($L_{er}$).

The dynamic data selection can allow minimisation of the amount of data to encrypt for a given security level. The invention fulfils the criteria described hereinbefore:

- **Tunability:** it is tunable as it is possible to dynamically select the encryption parameters to obtain a certain goal.
- **Visual degradation:** multi-level visual degradation is achievable by tuning the encryption parameters as described hereinbefore.
- **Cryptographic security:** the encryption is based on a time-proven algorithm (AES) and performs on packet data which are encoded by an arithmetic coder. It is believed that algorithm cryptographically is quite secure, as it is computationally very difficult to decode an arithmetically encoded stream.
- **Encryption reduction:** the packet selection optimization allows achieving the target application visual degradation required with minimum number of bytes encrypted.
- **Format compliance/transcodability:** the modified CTR mode of AES-128 we propose outputs a format compliant cipher bit stream while avoiding reiterating the encryption. The metadata can be inserted at a specific marker segment (for example COM marker segment) and has no impact on format compliance.
- **Compression friendliness:** The proposed algorithm has no impact on the compressibility of the bit stream; a negligible overhead is introduced by the inclusion of the metadata into the bit stream.
- **Error resiliency:** the proposed algorithm encrypts each byte independently; any error in the cipher bit stream will only impact the same byte after decryption. Thus, the distortion will be confined to the code block to which that byte contributes.

Finally, a number of application scenarios will be given for illustrative purposes.

**Resolution scalable scenario: a** reduced resolution preview is made available to all users (without the need to have the decryption key). The following parameters are set:

• **For compression:**

○ The progression order: PROG = RLCP or RPLC.
○ The number of resolutions (R): depends on the preview size.
○ The number of layers (L): it is recommended to set a sufficient number of quality layers L in order to be able to fine-tune the selective encryption to the right encryption reduction. To achieve high encryption reduction it is usually important to set L≥10.
   ∘ Number of components (C): not important in this scenario.
   ∘ Number of precincts (P): not important in this scenario.

However, the choice of the number of precincts (or size) impacts compression efficiency.

• **For selective encryption:**

   ∘ Layers encryption ratio ($L_{er}$): a high value is needed (≥50%) if high visual degradation is required and vice versa.
   ∘ Packets encryption ratio ($P_{er}$): a high value is needed (≥50%) if high visual degradation is required with high cryptographic security. And vice versa.
   ∘ Resolutions encrypted ($R_e$): Gives the list of resolutions to encrypt. In this scenario, only a number of high resolutions will be encrypted.
   ∘ Encrypted precincts ($P_e$): all the precincts are candidates for encryption.
   ∘ Encrypted components ($C_e$): all the components are candidates for encryption.

**Quality scalable scenario:** a reduced quality preview is made available to all users (without the need to have the decryption key). The following parameters are set:

• **For compression:**

   ∘ The progression order: PROG = LRCP.
   ∘ The number of resolutions (R): not important in this scenario. However it impacts compression efficiency.
   ∘ The number of layers (L): it is recommended to set a sufficient number of quality layers L in order to be able to fine tune the selective encryption to the right encryption reduction. To achieve high encryption reduction it is usually important to set L≥10.
   ∘ Number of components (C): not important in this scenario.
   ∘ Number of precincts (P): not important in this scenario.

However, the choice of the precincts number (or size) impacts compression efficiency.

• **For selective encryption:**

   ∘ Layers encryption ratio ($L_{er}$): In this scenario, it is required to leave unencrypted a number of base quality layers and to encrypt enhancement quality layers. The lowest $L_{er}$% enhancement quality layers are encrypted.
   ∘ Packets encryption ratio ($P_{er}$): a high value is needed (≥50%) if high visual degradation is required with high cryptographic security, and vice versa.
   ∘ Number resolutions encrypted ($R_e$): $1 \le R_e \le R$, $R_e$ is required to be high if high visual degradation is needed.
   ∘ Encrypted precincts ($P_e$): all the precincts are candidates for encryption.
   ∘ Encrypted components ($C_e$): all the components are candidates for encryption.

**Selective spatial encryption scenario:** a particular region of the image needs to be encrypted. The following parameters are set:

• **For compression:**

   ∘ The progression order: PROG = PCRL.
   ∘ The number of resolutions (R): not important in this scenario.

However, it impacts compression efficiency.

   ∘ The number of layers (L): it is recommended to set a sufficient number of quality layers L in order to be able to fine tune the selective encryption to the right encryption reduction. To achieve high encryption reduction it is usually important to set.
   ∘ Number of components (C): not important in this scenario.
   ∘ Number of precincts (P): should be defined to achieve a target spatial granularity. The smaller the precincts are, the more accurate the spatial selection will be. On the other hand, small precincts adversely impact compression efficiency.

• **For selective encryption:**

   ∘ Layers encryption ratio ($L_{er}$): a high value is needed if high visual degradation is required, and vice versa.
   ∘ Packets encryption ratio ($P_{er}$): a high value is needed (≥50%) if high visual degradation is required with high cryptographic security, and vice versa.
   ∘ Number of resolutions encrypted ($R_e$): $1 \le R_e \le R$, $R_e$ is required to be high if high visual degradation is needed.
○ Encrypted precincts ($P_e$): $P_e$ contains all the precincts that cover any part included in the region to encrypt.
○ Encrypted components ($C_e$): all the components are candidates for encryption.

**Selective component encryption scenario:** a subset of components of the image is to be encrypted. The following parameters are set:

**• For compression:**

○ The progression order: PROG = CPRL.
○ The number of resolutions (R): not important in this scenario.

However, it impacts compression efficiency.

○ The number of layers (L): it is recommended to set a sufficient number of quality layers L in order to be able to fine tune the selective encryption to the right encryption reduction. To achieve high encryption reduction it is important to set L≥10.
○ Number of components (C): depends on the image class/nature. For example some medical images contain a large number of components.
○ Number of precincts (P): not important in this scenario. However, it impacts compression efficiency.

**• For selective encryption:**

○ Layers encryption ratio ($L_{er}$): a high value is needed (≥50%) if high visual degradation is required, and vice versa.
○ Packets encryption ratio ($P_{er}$): a high value is needed (≥50%) if high visual degradation is required with high cryptographic security, and vice versa.
○ Number of resolutions encrypted ($R_e$):1 ≤ $R_e$ ≤ R, $R_e$ is required to be high if high visual degradation is needed.
○ Encrypted precincts ($P_e$): all the precincts are candidates for encryption.
○ Encrypted components ($C_e$): $C_e$ contains the indices of the components to be encrypted.

**Full encryption scenario:** full encryption of the image is required. The following parameters are set:

**• For compression:**

○ The progression order: PROG is not important in this scenario; it can be user defined.
○ The number of resolutions (R): not important in this scenario; it can be user defined.
○ The number of layers (L): not important in this scenario; it can be user defined.
○ Number of components (C): not important in this scenario; it can be user defined.
○ Number of precincts (P): not important in this scenario; it can be user defined.

**• For selective encryption:**

○ Layers encryption ratio ($L_{er}$): $L_{er}$ = 100%.
○ Packets encryption ratio ($P_{er}$): $P_{er}$ = 100%.
○ Number resolutions encrypted ($R_e$): $R_e$ = R.
○ Encrypted precincts ($P_e$): all the precincts are candidates for encryption.
○ Encrypted components ($C_e$): all the components are candidates for encryption.

Each feature disclosed in the description and (where appropriate) the claims and drawings may be provided independently or in any appropriate combination. Features described as being implemented in hardware may also be implemented in software, and vice versa. Connections may, where applicable, be implemented as wireless connections or wired, not necessarily direct or dedicated, connections.
It will be appreciated that the present invention is not limited to the preferred embodiment, JPEG2000, but may equally be used in other systems having a similar, layered architecture of the compressed pictures and in which the encoder provides information on the distortion reduction of each packet.
Reference numerals appearing in the claims are by way of illustration only and shall have no limiting effect on the scope of the claims.

**Claims**

1. A method of protecting compressed visual content organised in a set of packets, the method comprising the steps of:

- calculating (710) the distortion-to-rate ratio for each packet in the set of packets, using for each packet the size of the packet and information about the contribution of the packet to the reduction of distortion, the information having been calculated by an encoder that encoded the compressed visual content;
- encrypting (660) the non-encrypted packet with the highest distortion-to-rate ratio of the set of packets; and
- repeating the encryption step only until the sum of the distortion of the encrypted packets has reached a predetermined distortion for the visual content.

2. The method of claim 1, further comprising the step of selecting (650) at least one part of the packet to protect.

3. The method of claim 1, further comprising the step of outputting the protected visual content and information about which packets are protected.

4. The method of claim 1, further comprising the step of sorting the packets according to their distortion-to-rate ratio.

5. An apparatus (800) for protecting compressed visual content organised in a set of packets (CNT'), the apparatus (800) comprising a protection device (820) adapted to:

   - calculate the distortion-to-rate ratio for each packet in the set of packets, using for each packet the size of the packet and information about the contribution of the packet to the reduction of distortion, the information having been calculated by an encoder that encoded the compressed visual content;
   - encrypt the non-encrypted packet with the highest distortion-to-rate ratio of the set of packets; and
   - repeat the encryption step only until the sum of the distortion of the encrypted packets has reached a predetermined distortion for the visual content.

6. The apparatus of claim 5, wherein the protection device is further adapted to select at least one part of the packet to protect.

7. The apparatus of claim 5, wherein the protection device is further adapted to output the protected visual content and information about which packets are protected.

8. The apparatus of claim 5, wherein the protection device is further adapted to sort the packets according to their distortion-to-rate ratio.

**Patentansprüche**

1. Verfahren zum Schützen von komprimiertem visuellem Inhalt, der in einer Menge von Paketen organisiert ist, wobei das Verfahren die folgenden Schritte umfasst:

   - Berechnen (710) des Verzerrungs/Raten-Verhältnisses für jedes Paket in der Menge von Paketen unter Verwendung der Größe des Pakets und von Informationen über den Beitrag des Pakets zur Verringerung der Verzerrung für jedes Paket, wobei die Informationen durch einen Codierer berechnet worden sind, der den komprimierten visuellen Inhalt codiert hat;
   - Verschlüsseln (660) des nichtverschlüsselten Pakets mit dem höchsten Verzerrungs/Raten-Verhältnis der Menge der Pakete; und
   - Wiederholen des Schritts des Verschlüsselns nur, bis die Summe der Verzerrung der verschlüsselten Pakete eine vorgegebene Verzerrung für den visuellen Inhalt erreicht hat.

2. Verfahren nach Anspruch 1, das ferner den Schritt des Auswählens (650) mindestens eines Teils des zu schützenden Pakets umfasst.

3. Verfahren nach Anspruch 1, das ferner den Schritt des Ausgebens des geschützten visuellen Inhalts und von Informationen darüber, welche Pakete geschützt werden, umfasst.

4. Verfahren nach Anspruch 1, das ferner den Schritt des Sortierens der Pakete in Übereinstimmung mit ihrem Verzerrungs/Raten-Verhältnis umfasst.

5. Vorrichtung (800) zum Schützen von komprimiertem visuellem Inhalt, der in einer Menge von Paketen (CNT') organisiert ist, wobei die Vorrichtung (800) eine Schutzeinrichtung (820) umfasst, die ausgelegt ist zum:

   - Berechnen des Verzerrungs/Raten-Verhältnisses für jedes Paket in der Menge von Paketen unter Verwendung der Größe des Pakets und von Informationen über den Beitrag des Pakets zur Verringerung der Verzerrung für jedes Paket, wobei die Informationen durch einen Codierer berechnet worden sind, der den komprimierten visuellen Inhalt codiert hat;
   - Verschlüsseln des nichtverschlüsselten Pakets mit dem höchsten Verzerrungs/Raten-Verhältnis der Menge der Pakete; und
   - Wiederholen des Schritts des Verschlüsselns nur, bis die Summe der Verzerrung der verschlüsselten Pakete eine vorgegebene Verzerrung für den visuellen Inhalt erreicht hat.

6. Vorrichtung nach Anspruch 5, wobei die Schutzeinrichtung ferner dafür ausgelegt ist, mindestens eines Teil des zu schützenden Pakets auszuwählen.

7. Vorrichtung nach Anspruch 5, wobei die Schutzeinrichtung ferner dafür ausgelegt ist, den geschützten visuellen Inhalt und Informationen darüber, welche Pakete geschützt werden, auszugeben.

**8.** Vorrichtung nach Anspruch 5, wobei die Schutzeinrichtung ferner dafür ausgelegt ist, die Pakete in Übereinstimmung mit ihrem Verzerrungs/Raten-Verhältnis zu sortieren.

**Revendications**

**1.** Procédé permettant de protéger le contenu visuel compressé organisé en un ensemble de paquets, ledit procédé comprenant les étapes suivantes :

- le calcul (710) du rapport distorsion-débit pour chaque paquet de l'ensemble de paquets, utilisant pour chaque paquet la taille du paquet et les informations sur la contribution du paquet à la réduction de la distorsion, les informations ayant été calculées par un encodeur ayant encodé contenu visuel compressé ;
- le cryptage (660) du paquet non crypté ayant le rapport distorsion-débit le plus élevé de l'ensemble de paquets ; et
- la répétition de l'étape de cryptage uniquement jusqu'à ce que la somme de la distorsion des paquets cryptés ait atteint une distorsion prédéterminée pour le contenu visuel.

**2.** Procédé selon la revendication 1, comprenant en outre l'étape de sélection (650) d'au moins une partie du paquet à protéger.

**3.** Procédé selon la revendication 1, comprenant en outre l'étape de sortie du contenu visuel protégé et les informations sur les paquets protégés.

**4.** Procédé selon la revendication 1, comprenant en outre l'étape de tri des paquets selon leur rapport distorsion-débit.

**5.** Appareil (800) permettant de protéger le contenu visuel compressé organisé en un ensemble de paquets (CNT'), ledit appareil (800) comprenant un dispositif de protection (820) adapté pour :

- calculer le rapport distorsion-débit pour chaque paquet de l'ensemble de paquets, en utilisant pour chaque paquet la taille du paquet et les informations sur la contribution du paquet à la réduction de la distorsion, les informations ayant été calculées par un encodeur ayant codé le contenu visuel compressé ;
- crypter le paquet non crypté ayant le rapport distorsion-débit le plus élevé de l'ensemble de paquets ; et
- répéter l'étape de cryptage uniquement jusqu'à ce que la somme de la distorsion des paquets cryptés ait atteint une distorsion prédéterminée pour le contenu visuel.

**6.** Appareil selon la revendication 5, dans lequel le dispositif de protection est en outre adapté pour sélectionner au moins une partie du paquet à protéger.

**7.** Appareil selon la revendication 5, dans lequel le dispositif de protection est en outre adapté pour sortir le contenu visuel protégé et les informations sur les paquets protégés.

**8.** Appareil selon la revendication 5, dans lequel le dispositif de protection est en outre adapté pour trier les paquets selon leur rapport distorsion-débit.

Figure 1 (prior art)

Figure 2 (prior art)

| SOP | Packet header | EPH | Packet data |
|-----|---------------|-----|-------------|
| 410 | 420 | 430 | 440 |

Figure 4 (prior art)

Figure 3 (prior art)

520

CNT ' → Encrypt → [CNT ']

Selective encryption parameters

540

Dynamic parameter selection

550

Figure 5

Select application — 610

Obtain compression & encryption parameters — 620

Select candidate packets for encrypion — 630

Select packets to encrypt — 640

Select packet data to encrypt — 650

Encryption — 660

Figure 6

Obtain distortion-to-rate ratio for packets 710

Order packets according to the distortion-to-rate ratio 720

Encrypt the non-encrypted packet having the highest ratio 730

N Target distortion obtained? 740

Y

End 750

Figure 7

810 820

CNT → Encode CNT ' → Encrypt → [CNT '] + info

800

Metadata → Proc. 840

Encryption apparatus

850

880 870 860

Proc. info

CNT ← Decode ← CNT ' Decrypt ← [CNT ']

Decryption apparatus

Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5805700 A

- US 20050183118 A

### Non-patent literature cited in the description

- **M. VAN DROOGENBROECK ; R. BENEDETT.** Techniques for a Selective Encryption of Uncompressed and Compressed Images. *Proceedings of Advanced Concepts for Intelligent Vision Systems (ACIVS) 2002, Ghent, Belgium,* 09 September 2002
- **A. POMMER ; A. UHL.** Selective Encryption of Wavelet-Packet Encoded Image Data. *ACM Multimedia Systems Journal, Special Issue on Multimedia Security,* 2003

- **Y. WU ; R. H. DENG.** Compliant Encryption of JPEG2000 Codestreams. *IEEE International Conference on Image Processing (ICIP 2004), Singapore,* October 2004
- **R. NORCEN ; A. UHL.** Selective Encryption of the JPEG2000 Bitstream. *Journal of Electronic Imaging,* October 2006, vol. 15 (4), 043013